# EUROPÄISCHE PATENTSCHRIFT

(11) **EP 1 512 588 B1**
(45) Veröffentlichungstag und Bekanntmachung des Hinweises auf die Patenterteilung: **27.09.2006**
(21) Anmeldenummer: 04019936.6
(22) Anmeldetag: 23.08.2004
(51) Int. Cl.: B60R 21/26

(54) **Gasgenerator**
Gas generator
Generateur de gaz

(30) Priorität: 03.09.2003 DE 20313664 U
(43) Veröffentlichungstag der Anmeldung: 09.03.2005
(73) Patentinhaber: TRW Airbag Systems GmbH, 84544 Aschau am Inn (DE)
(72) Erfinder: Meixner, Rudolf, 84539 Ampfing (DE); Pritz, Helmut, 84539 Ampfing (DE); Ragner, Herbert, 84095 Fürth (DE)
(74) Vertreter: Kitzhofer, Thomas

(56) Entgegenhaltungen:
- EP-A- 0 792 776
- EP-A- 0 949 126
- EP-A- 0 958 973
- DE-A- 19 926 606

## Beschreibung

Die Erfindung betrifft einen Gasgenerator, mit einer ersten und einer zweiten Brennkammer, denen jeweils ein Treibsatz und ein Anzünder zugeordnet ist, einer zwischen den Brennkammern angeordneten Ausströmkammer mit Einström- und Ausströmöffnungen, und einer die Ausströmkammer in zwei Teilkammern unterteilenden Trennscheibe, deren Randbereich wenigstens abschnittsweise an einer Begrenzung der Ausströmkammer anliegt, wobei jede Teilkammer einer Brennkammer zugeordnet ist, siehe EP-A-0 792 776.

Vor allem bei mehrstufigen Rohrgasgeneratoren, wie sie z.B. in Beifahrer-Gassackmodulen Einsatz finden, ist üblicherweise an jedem axialen Ende des rohrförmigen Gehäuses eine Brennkammer vorgesehen, während in der Mitte zwischen den Brennkammern eine gemeinsame Ausström- oder Filterkammer angeordnet ist. Um ein ungewolltes Überzünden zwischen den beiden Treibsätzen zu verhindern, ist bekannt, die gemeinsame Ausströmkammer durch eine Trennwand zu unterteilen.

Es ist Aufgabe der Erfindung, die Fertigung eines Gasgenerators zu vereinfachen und den Gasgenerator selbst effektiver und kostengünstiger zu machen.

Dies wird bei einem oben genannten Gasgenerator erreicht, indem der vom Randbereich umschlossene Mittelteil der Trennscheibe eine von einer Ebene abweichende Geometrie hat und wenigstens einen Vorsprung aufweist, der in eine der Teilkammern hineingerichtet ist. Durch ihre Form gibt die Trennscheibe einen Strömungsweg für aus der Brennkammer durch die Ausströmkammer zu den Ausströmöffnungen des Gasgenerators strömendes Gas vor. Die Form der Trennscheibe kann man leicht so wählen, daß das Gas in Kontakt mit bestimmten Abschnitten der Trennscheibe kommen muß, wodurch zum einen eine Kühlwirkung und zum anderen eine Partikelabscheidung, gleichzusetzen mit einer Filterwirkung, erreicht werden kann. Hierdurch ist es möglich, weniger Filter einzusetzen, oder sogar ganz auf Filtereinsätze zu verzichten. Ein weiterer Vorteil der Verwendung einer derartigen Trennscheibe liegt darin, daß für die Trennscheibe eine Form gewählt werden kann, die sich selbständig in der Ausströmkammer fixiert, so daß die Trennscheibe nicht mehr durch weitere Mittel, z.B. Schweißnähte befestigt werden muß. Dies vereinfacht den Herstellungsprozeß.

Die Trennscheibe kann eine deutlich von der Ebene abweichende Form aufweisen.

Bevorzugt hat die Trennscheibe eine solche Form, z.B. durch das Ausprägen von Vorsprüngen und Vertiefungen, daß in der Ausströmkammer sogenannte Toträume gebildet sind, in denen sich Partikel ablagern können, wenn ein Gasstrom die Ausströmkammer durchströmt. Hierzu ist die Form der Trennscheibe so gewählt, daß die Trennscheibe abseits eines direkten Strömungswegs von den Einström- zu den Ausströmöffnungen liegende Toträume in den Teilkammern erzeugt.

Um ein ungewolltes Überzünden zwischen den Treibsätzen zu verhindern, ist es vorteilhaft, wenn die Trennscheibe die beiden Teilkammern strömungsmäßig vollständig voneinander trennt. Dies kann sowohl bedeuten, daß die Trennscheibe an sich keine Öffnungen aufweist, als auch, daß der Randbereich der Trennscheibe gasdicht mit der Begrenzung der Ausströmkammer abschließt.

In einer bevorzugten Ausführungsform der Erfindung ist jede Teilkammer durch eine Wand mit wenigstens einer Einströmöffnung von der zugeordneten Brennkammer abgegrenzt, und die Trennscheibe stützt sich an den Wänden ab. Hierzu sind z.B. Vorsprünge vorgesehen, die in beide Teilkammern hineingerichtet sind, so daß die Trennscheibe unverschieblich in der Ausströmkammer angeordnet werden kann.

Im Querschnitt kann die Trennscheibe eine, im Querschnitt gesehen, Wellenoder W-Form aufweisen. Auch jede andere geeignete Form ist natürlich einsetzbar.

Nach einer bevorzugten Ausführungsform der Erfindung ist vorgesehen, daß jede Teilkammer von der zugeordneten Brennkammer durch eine Wand mit wenigstens einer Einströmöffnung abgegrenzt ist, daß die Trennscheibe von jeder Teilkammer gesehen wenigstens eine Einbuchtung oder Vertiefung aufweist und die Trennscheibe so angeordnet ist, daß der Einströmöffnung in jeder Wand eine Vertiefung gegenüberliegt. Hierdurch kann der Abstand der Trennscheibe von den Einströmöffnungen insbesondere gegenüber einer ebenen Scheibe maximiert werden, so daß das einströmende Gas erst nach einem längeren Weg auf das Material der Trennscheibe trifft. Hierdurch wird die thermische Belastung der Trennscheibe reduziert.

Bevorzugt ist in diesem Fall wenigstens eine Einströmöffnung in der Wand der ersten Brennkammer gegenüber wenigstens einer Einströmöffnung in der Wand der zweiten Brennkammer versetzt angeordnet.

Optional kann im Bereich der Ausströmöffnungen ein Filter angeordnet sein.

Die Aufgabe wird auch durch einen Gasgenerator mit einem rohrförmigen Gehäuse gelöst, in dem axial hintereinanderliegend eine einen Treibsatz enthaltende Brennkammer und eine Ausströmkammer angeordnet sind, bei dem in Strömungsrichtung gesehen hinter der Ausströmkammer, d.h. in axialer Richtung nach der Ausströmkammer ein von der Ausströmkammer bis auf wenigstens eine Durchströmöffnung abgegrenzter Totraum vorgesehen ist, der strömungsmäßig nur mit der Ausströmkammer verbunden ist. Gas strömt erfindungsgemäß von der Brennkammer zunächst in die Ausströmkammer und kann von dort über die Ausströmöffnungen die Außenumgebung des Gasgenerators, z.B. einen Gassack, erreichen. Durch die Durchströmöffnung gelangt jedoch ein Teil des Gases in den Totraum, wo es zu einer Entspannung und einer Kühlung des Gases sowie zu einer Partikelabscheidung kommt. Das Gas strömt dann durch die Durchströmöffnung zurück in die Ausströmkammer und von dort über die Ausströmöffnungen aus dem Gasgenerator ab.

In einer bevorzugten Ausführungsform ist der Totraum von der Ausströmkammer durch eine Trennscheibe abgegrenzt. Durch die Anordnung und Größe der Durchströmöffnungen in der Trennscheibe sowie die Positionierung der Trennscheibe im rohrförmigen Gehäuse, wodurch die Größe der Ausströmkammer und des Totraums bestimmt werden können, läßt sich ein Gasgeneratormodell schnell und flexibel für verschiedene Anforderungen konfigurieren.

Weitere Merkmale und Vorteile der Erfindung ergeben sich aus der nachfolgenden Beschreibung mehrerer Ausführungsbeispiele in Verbindung mit den beigefügten Zeichnungen. In diesen zeigen:
- Figur 1 einen schematischen Schnitt durch einen erfindungsgemäßen Gasgenerator gemäß einer ersten Ausführungsform;
- Figur 2 einen schematischen Schnitt durch einen erfindungsgemäßen Gasgenerator gemäß einer zweiten Ausführungsform; und
- Figur 3 einen schematischen Schnitt durch einen erfindungsgemäßen Gasgenerator gemäß einer dritten Ausführungsform.

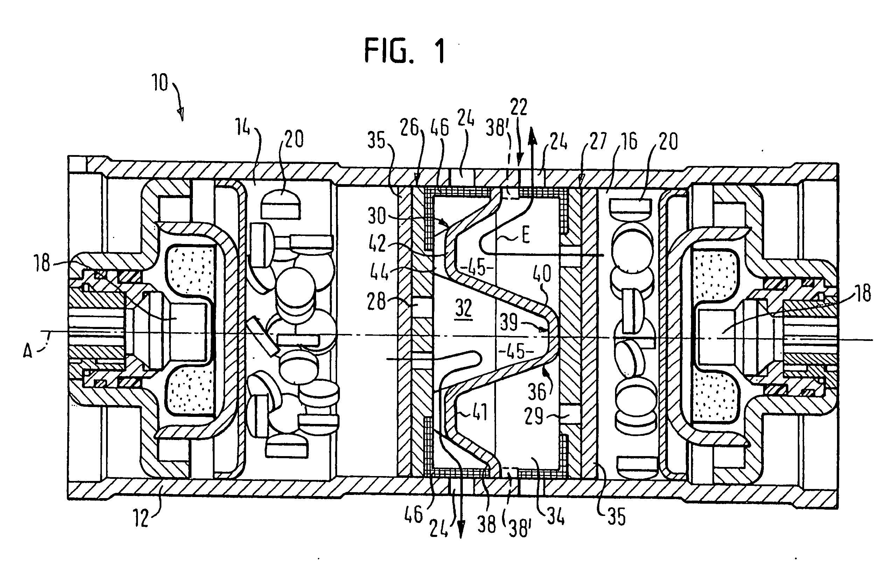

Figur 1 zeigt einen Gasgenerator 10 mit einem rohrförmigen Gehäuse 12. An den axialen Enden des Gehäuses 12 sind eine erste und eine zweite Brennkammer 14, 16 angeordnet, wobei jede Brennkammer 14, 16 mit einem Anzünder 18 verbunden ist und einen Treibsatz 20 enthält.

Zwischen den Brennkammern 14, 16 ist eine Ausströmkammer 22 angeordnet, die in der zylindrischen Wand des Gehäuses 12 angeordnete Ausströmöffnungen 24 aufweist, durch die in den Brennkammern 14, 16 aus den Treibsätzen 20 erzeugtes Gas die Ausströmkammer 22 verlassen kann.

Die Brennkammern 14, 16 sind von der Ausströmkammer 22 durch je eine Wand 26, 27 getrennt, die jeweils Einströmöffnungen 28, 29 aufweisen, über die die Brennkammern 14, 16 mit der Ausströmkammer 22 verbunden sind.

In jeder Brennkammer 14, 16 ist jeweils noch eine Membran 35 vor der Brennkammerwand 26, 27 angeordnet, die zerstört wird und die Einströmöffnungen 28, 29 freigibt, wenn der jeweilige Treibsatz 20 gezündet wird. Es ist auch möglich, hier ein Filter einzusetzen.

In der Ausströmkammer 22 ist eine Trennscheibe 30 angeordnet, die die Ausströmkammer 22 in zwei strömungsmäßig voneinander getrennte Teilkammern 32, 34 unterteilt.

Die Trennscheibe 30 ist so plastisch umgeformt, daß sie in ihrem Mittelteil 36 eine von einer Ebene E, die vorzugsweise rechtwinklig zur Achse A steht, abweichende Form hat. Der Mittelteil 36 ist von einem Randbereich 38 umschlossen. Im gezeigten Beispiel weist die Trennscheibe 30 in der Mitte eine zentrale Einbuchtung 39 auf, die für die Teilkammer 34 einen in diese hineinragenden Vorsprung 40 bildet. Die Teilkammer 34 hat um den Vorsprung 40 herum eine ringförmige Einbuchtung 41 und von dieser ausgehend mehrere auf einem Umfang liegende, tiefere, punktförmige Einbuchtungen. Diese Einbuchtungen bilden einen ringförmigen Vorsprung 42 mit mehreren kuppelförmigen Vorsprüngen 44, welche in die Teilkammer 32 hineinragen.

Die Trennscheibe 30 ist so in der Ausströmkammer 22 angeordnet, daß der Randbereich 38 mit seiner Außenfläche am Gehäuse 12 anliegt, und zwar so, daß in Axialrichtung A gesehen Ausströmöffnungen 24 auf jeder Seite der Trennscheibe 30 angeordnet sind. Die zentrale Einbuchtung 39 ist so tief, daß sich die Trennscheibe 30 mit dem Vorsprung 40 an der Wand 27 der zweiten Brennkammer 16 abstützt, während die ringförmige Einbuchtung 41 abschnittsweise so tief ist, daß sich die entsprechenden Vorsprünge 44 der Trennscheibe 30 an der Wand 26 der ersten Brennkammer 14 abstützen. Auf diese Weise ist die Trennscheibe 30 unverschieblich und vorgespannt in der Ausströmkammer 22 fixiert.

Die Einströmöffnungen 28 in der Wand 26 sind so angeordnet, daß sie der zentralen Einbuchtung 39 der Trennscheibe 30 gegenüberliegen. Die Einströmöffnungen 29 in der Wand 27 hingegen sind so angeordnet, daß sie der ringförmigen Einbuchtung 41 gegenüberliegen. Die Einströmöffnungen 28 in der Wand 26 sind also gegenüber den Einströmöffnungen 29 in der Wand 27 der zweiten Brennkammer 16 versetzt. Dies hat zur Folge, daß das einströmende heiße Gas erst nach einer möglichst langen Strecke auf die Trennscheibe 30 trifft, so daß deren thermische Belastung maximal reduziert wird.

Durch die zentrale Einbuchtung 39 und die ringförmige Einbuchtung 41 in Kombination mit den Vorsprüngen 40, 42, 44 sind in den Teilkammern 32, 34 Toträume 45 gebildet, die nicht auf dem direkten Strömungsweg zwischen den Einströmöffnungen 28, 29 und den Ausströmöffnungen 24 gelegen sind. In diesen Toträumen 45 können sich im Gasstrom enthaltene Partikel ablagern. Hierdurch erfüllt die Trennscheibe 30 eine Filterwirkung.

Aus der ersten Brennkammer 14 gelangt das Gas durch die Einströmöffnungen 28 zunächst in die zentrale Einbuchtung 39, wo sich darin enthaltene Partikel in dem hier gebildeten Totraum ablagern können. Dann strömt das Gas zwischen den kuppelförmigen Vorsprüngen 44 radial nach außen (siehe Pfeil).

Das Gas aus der zweiten Brennkammer 16 strömt durch die Einströmöffnungen 29 in die Einbuchtung 41 und von dort direkt zu den Ausströmöffnungen 24 (siehe Pfeil in Figur 1). Auch hier dienen die Toträume dazu, Partikel abzufangen.

Optional kann zusätzlich vor den Ausströmöffnungen 24 noch ein bekannter Filter 46 angeordnet sein.

Es ist auch möglich, den Randbereich 38 der Trennscheibe 30 zu einem zylindrischen Bund 38' umzuformen, der flächig an der Wand des Gehäuses 12 anliegt, wie dies gestrichelt in Figur 1 angedeutet ist.

Der Randbereich 38 der Trennscheibe 30 muß nicht in einer Ebene liegen. Die Trennscheibe 30 kann durch Umformen einer flachen Scheibe ihre gewünschte Form erhalten. Die Trennscheibe 30 ist in allen Ausführungsformen ein von anderen Bauteilen des Gasgenerators wie z.B. den Brennkammerwänden separates Bauteil.

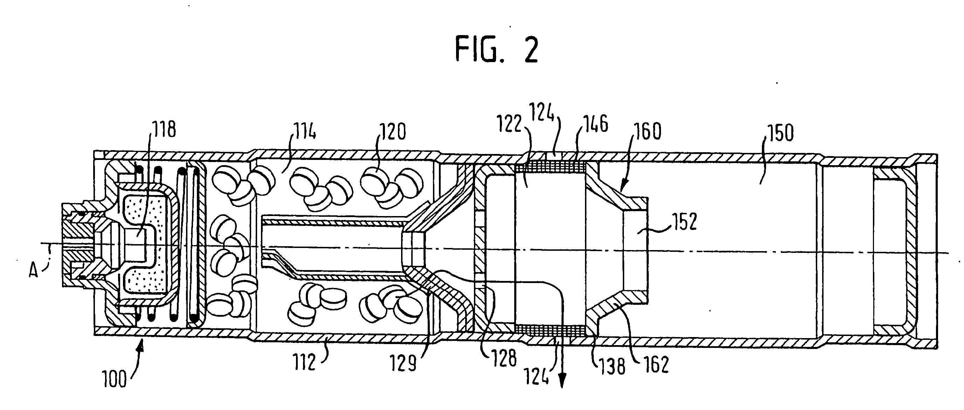

Figur 2 zeigt einen weiteren Gasgenerator 100. Dieser kann entweder ein einstufiger Gasgenerator oder ein Teil eines zweistufigen Gasgenerators sein, wobei die zweite Hälfte sich spiegelbildlich dazu an die gezeigte erste Hälfte anschließen würde.

In einem rohrförmigen Gehäuse 112 ist an einem axialen Ende eine Brennkammer 114 mit einem Treibsatz 120 und einem zugeordneten Anzünder 118 vorgesehen. In Axialrichtung A schließt sich an die Brennkammer 114 in Strömungsrichtung gesehen eine Ausströmkammer 122 mit Ausströmöffnungen 124 an. In der Wand der Brennkammer 114 sind Einströmöffnungen 128 vorgesehen, die die Brennkammer 114 strömungsmäßig mit der Ausströmkammer 122 verbinden.

In der Brennkammer 114 ist außerdem ein bekannter Vorfilter 129 angeordnet. Vor den Ausströmöffnungen 124 kann optional ein Filter 146 vorgesehen sein.

In Strömungsrichtung hinter der Ausströmkammer 122 gelegen (in Figur 2 durch einen Pfeil verdeutlicht) ist ein Totraum 150. Der Totraum 150 ist von der Ausströmkammer 122 durch eine mit einer Durchströmöffnung 152 versehene Trennscheibe 160 abgegrenzt. Der Rand 138 der Trennscheibe 160 ist an der Wand des Gehäuses 112 fest befestigt.

Der Totraum 150 weist keine andere Öffnung auf als die Durchströmöffnung 152, so daß er strömungsmäßig nur mit der Ausströmkammer 122 verbunden ist.

Die Trennscheibe 160 hat eine Düsenform mit einem axial langgestreckten, kegelstumpfförmig zulaufenden Mittelteil 162, das zum Totraum 150 hin gerichtet ist.

Über die Position der Trennscheibe 160 wird sowohl die Größe der Ausströmkammer 122 als auch die Größe des Totraums 150 bestimmt. Dies, zusammen mit dem Durchmesser der Durchströmöffnung 152 kann zur Anpassung der Charakteristik eines Gasgeneratormodells verwendet werden.

Ein Teil des aus der Brennkammer 114 in die Ausströmkammer 122 einströmenden Gases gelangt durch die Durchströmöffnung 152 in den Totraum 150, wo das Gas gekühlt und Partikel abgeschieden werden. Das Gas strömt dann zurück durch die Durchströmöffnung 152 und gelangt durch die Ausströmöffnungen 124 aus dem Gasgenerator heraus.

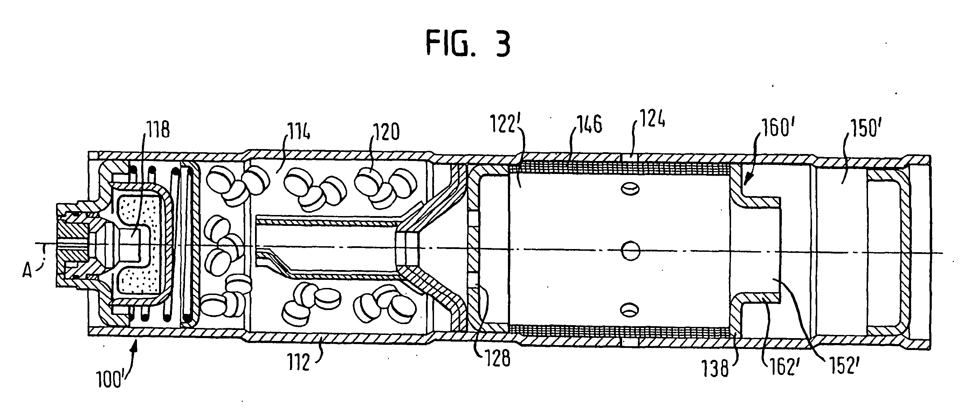

Figur 3 zeigt eine Variante des Gasgenerators 100 aus Figur 2. Es werden nur die unterschiedlichen Bauteile beschrieben.

Bei dem gezeigten Gasgenerator 100' ist die Ausströmkammer 122' größer als der Totraum 150', während es bei der in Figur 2 gezeigten Ausführungsform umgekehrt ist. Außerdem verläuft der Mittelteil 162' der Trennscheibe 160' nicht kegelstumpfförmig, sondern ist als Zylinder mit gerade verlaufenden Wänden ausgebildet. Die Funktionsweise ist aber dieselbe.

## Patentansprüche

1. Gasgenerator,
mit einer ersten und einer zweiten Brennkammer (14, 16), denen jeweils ein Treibsatz (20) und ein Anzünder (18) zugeordnet ist,
einer zwischen den Brennkammern (14, 16) angeordneten Ausströmkammer (22) mit Einström- und Ausströmöffnungen (28, 29, 24),
und einer die Ausströmkammer (22) in zwei Teilkammern (32, 34) unterteilenden Trennscheibe (30), deren Randbereich (38) wenigstens abschnittsweise an einer Begrenzung (12) der Ausströmkammer (22) anliegt, wobei jede Teilkammer (32, 34) einer Brennkammer (14, 16) zugeordnet ist,
**dadurch gekennzeichnet, daß** ein vom Randbereich (38) umschlossener Mittelteil (36) der Trennscheibe (30) eine von einer Ebene (E) abweichende Geometrie hat und wenigstens einen Vorsprung (40, 42, 44) aufweist, der in eine der Teilkammern (32, 34) hinein gerichtet ist.

2. Gasgenerator nach Anspruch 1, **dadurch gekennzeichnet, daß** durch die Form der Trennscheibe (30) in der Ausströmkammer (22) Toträume (45) gebildet sind, in denen sich Partikel ablagern, wenn ein Gasstrom die Ausströmkammer (22) durchströmt.

3. Gasgenerator nach einem der vorhergehenden Ansprüche, **dadurch gekennzeichnet, daß** die Trennscheibe (30) die beiden Teilkammern (32, 34) strömungsmäßig vollständig voneinander trennt.

4. Gasgenerator nach einem der vorhergehenden Ansprüche, **dadurch gekennzeichnet, daß** jede Teilkammer (32, 34) durch eine Wand (26, 27) mit wenigstens einer Einströmöffnung (28, 29) von der zugeordneten Brennkammer (14, 16) abgegrenzt ist und sich die Trennscheibe (30) an den Wänden (26, 27) abstützt.

5. Gasgenerator nach einem der vorhergehenden Ansprüche, **dadurch gekennzeichnet, daß** jede Teilkammer (32, 34) durch eine Wand (26, 27) mit wenigstens einer Einströmöffnung (28, 29) von der zugeordneten Brennkammer (14, 16) abgegrenzt ist, daß die Trennscheibe (30) von jeder Teilkammer (32, 34) gesehen wenigstens eine Einbuchtung (39, 41) aufweist, und daß die Trennscheibe (30) so angeordnet ist, daß der Einströmöffnung (28, 29) in jeder Wand (26, 27) eine Einbuchtung (39, 41) gegenüberliegt.

6. Gasgenerator nach einem der Ansprüche 4 und 5, **dadurch gekennzeichnet, daß** wenigstens eine Einströmöffnung (28) in der Wand (26) der ersten Brennkammer (14) gegenüber wenigstens einer Einströmöffnung (29) in der Wand (27) der zweiten Brennkammer (16) versetzt angeordnet ist.

7. Gasgenerator nach einem der vorhergehenden Ansprüche, **dadurch gekennzeichnet, daß** im Bereich der Ausströmöffnungen (24) ein Filter (46) angeordnet ist.

8. Gasgenerator, insbesondere nach einem der vorhergehenden Ansprüche, mit einem rohrförmigen Gehäuse (112), in dem axial hintereinanderliegend eine einen Treibsatz (120) enthaltende Brennkammer (114) und eine Ausströmkammer (122; 122') angeordnet sind,
**dadurch gekennzeichnet, daß** in axialer Richtung nach der Ausströmkammer (122; 122') ein von der Ausströmkammer (122; 122') bis auf wenigstens eine Durchströmöffnung (152; 152') abgegrenzter Totraum (150; 150') vorgesehen ist, der strömungsmäßig nur mit der Ausströmkammer (122; 122') verbunden ist.

9. Gasgenerator nach Anspruch 8, **dadurch gekennzeichnet, daß** der Totraum (150; 150') von der Ausströmkammer (122; 122') durch eine Trennscheibe (160; 160') abgegrenzt ist, die die Durchströmöffnung (152; 152') aufweist.

## Claims

1. A gas generator comprising
a first and a second combustion chamber (14, 16), which each have a propellant charge (20) and an igniter (18) associated therewith,
an outflow chamber (22) arranged between the combustion chambers (14, 16) and having inflow and outflow openings (28, 29, 24),
and a partition plate (30) dividing the outflow chamber (22) into two partial chambers (32, 34) and having an edge region (38) which at least partially lies against a boundary (12) of the outflow chamber (22), each partial chamber (32, 34) being associated with one combustion chamber (14, 16),
**characterized in that** a central portion (36) of the partition plate (30) that is surrounded by the edge region (38) has a geometry deviating from a plane (E) and has at least one projection (40, 42, 44) which is directed into one of the partial chambers (32, 34).

2. The gas generator according to claim 1, **characterized in that** owing to the shape of the partition plate (30), clearance volumes (45) are formed in the outflow chamber (22), in which particles settle when a gas stream flows through the outflow chamber (22).

3. The gas generator according to either of the preceding claims, **characterized in that** the partition plate (30) separates the two partial chambers (32, 34) completely from each other in terms of flow.

4. The gas generator according to any of the preceding claims, **characterized in that** each partial chamber (32, 34) is delimited from the associated combustion chamber (14, 16) by a wall (26, 27) having at least one inflow opening (28, 29) and the partition plate (30) rests against the walls (26, 27).

5. The gas generator according to any of the preceding claims, **characterized in that** each partial chamber (32, 34) is delimited from the associated combustion chamber (14, 16) by a wall (26, 27) having at least one inflow opening (28, 29), that the partition plate (30), viewed from each partial chamber (32, 34), has at least one indentation (39, 41), and that the partition plate (30) is arranged such that an indentation (39, 41) lies opposite the inflow opening (28, 29) in each wall (26, 27).

6. The gas generator according to either of Claims 4 and 5, **characterized in that** at least one inflow opening (28) in the wall (26) of the first combustion chamber (14) is arranged offset in relation to at least one inflow opening (29) in the wall (27) of the second combustion chamber (16).

7. The gas generator according to any of the preceding claims, **characterized in that** a filter (46) is arranged in the region of the outflow openings (24).

8. A gas generator, in particular according to any of the preceding claims, comprising a tubular housing (112), in which a combustion chamber (114) containing a propellant charge (120), and an outflow chamber (122; 122') are arranged axially one behind the other,
**characterized in that** in the axial direction the outflow chamber (122; 122') a clearance volume (150; 150') is provided which is separated from the outflow chamber (122; 122') except for at least one flow-through opening (152; 152') and which is connected in terms of flow only with the outflow chamber (122; 122').

9. The gas generator according to Claim 8, **characterized in that** the clearance volume (150; 150') is separated from the outflow chamber (122; 122') by a partition plate (160; 160') which has the flow-through opening (152; 152').

## Revendications

1. Générateur de gaz comprenant
une première et une deuxième chambre de combustion (14, 16) à chacune desquelles est associé un combustible (20) et un allumeur (18),
une chambre d'échappement (22) agencée entre les chambres de combustion (14, 16) avec des orifices d'admission et d'échappement (28, 29, 24),
et une plaque de séparation (30) divisant la chambre d'échappement (22) en deux chambres partielles (32, 34), dont la zone de bord (38) est en appui au moins par tronçon sur une délimitation (12) de la chambre d'échappement (22), chaque chambre partielle (32, 34) étant associée à une chambre de combustion (14, 16),
**caractérisé en ce qu'**une partie médiane (36) de la plaque de séparation (30), entourée par la zone de bord (38), a une géométrie divergeant d'un plan (E) et présente au moins une saillie (40, 42, 44) qui est dirigée dans une des chambres partielles (32, 34).

2. Générateur de gaz selon la revendication 1, **caractérisé en ce que** par la forme de la plaque de séparation (30) dans la chambre d'échappement (22) sont constitués des espaces morts (45) dans lesquels se déposent des particules lorsqu'un flux de gaz passe à travers la chambre d'échappement (22).

3. Générateur de gaz selon l'une des revendications précédentes, **caractérisé en ce que** la plaque de séparation (30) sépare les deux chambres partielles (32, 34) complètement l'une de l'autre du point de vue écoulement.

4. Générateur de gaz selon l'une des revendications précédentes, **caractérisé en ce que** chaque chambre partielle (32, 34) est délimitée par rapport à la chambre de combustion (14, 16) associée par une paroi (26, 27) avec au moins un orifice d'admission (28, 29) et la plaque de séparation (30) prend appui sur les parois (26, 27).

5. Générateur de gaz selon l'une des revendications précédentes, **caractérisé en ce que** chaque chambre partielle (32, 34) est délimitée par rapport à la chambre de combustion (14, 16) associée par une paroi (26, 27) avec au moins un orifice d'admission (28, 29), **en ce que** la plaque de séparation (30), vue depuis chaque chambre partielle (32, 34), présente au moins un creux (39, 41), et **en ce que** la plaque de séparation (30) est agencée de telle sorte qu'un creux se trouve à l'opposé de l'orifice d'admission (28, 29) dans chaque paroi (26, 27).

6. Générateur de gaz selon l'une des revendications 4 et 5, **caractérisé en ce qu'**au moins un orifice d'admission (28) dans la paroi (26) de la première chambre de combustion (14) est agencé de manière décalée par rapport à au moins un orifice d'admission (29) dans la paroi (27) de la deuxième chambre de combustion (16).

7. Générateur de gaz selon l'une des revendications précédentes, **caractérisé en ce qu'**un filtre (46) est agencé dans la région des orifices d'échappement (24).

8. Générateur de gaz, en particulier selon l'une des revendications précédentes, comportant un boîtier (112) en forme de tube, dans lequel sont agencées axialement l'une derrière l'autre une chambre de combustion (114) contenant un combustible (120) et une chambre d'échappement (122 ; 122'),
**caractérisé en ce qu'**il est prévu en direction axiale, en aval de la chambre d'échappement (122 ; 122'), un espace mort (150 ; 150') délimité par rapport à la chambre d'échappement (122; 122') à l'exception d'au moins un orifice de passage (152 ; 152'), lequel n'est relié en écoulement qu'avec la chambre d'échappement (122 ; 122').

9. Générateur de gaz selon la revendication 8, **caractérisé en ce que** l'espace mort (150 ; 150') est délimité par rapport à la chambre d'échappement (122 ; 122') par une plaque de séparation (160 ; 160') qui présente l'orifice de passage (152 ; 152').
